# EUROPÄISCHE PATENTSCHRIFT

(11) **EP 2 906 321 B1**
(45) Veröffentlichungstag und Bekanntmachung des Hinweises auf die Patenterteilung: **07.03.2018**
(21) Anmeldenummer: 13766499.1
(22) Anmeldetag: 19.09.2013
(51) Int. Cl.: B01D 33/00, B01D 33/09, B01D 33/21, B01D 33/80, B01D 33/82

(54) **SCHEIBENFILTER**
DISC FILTER
FILTRE A DISQUES

(30) Priorität: 11.10.2012 DE 102012218511
(43) Veröffentlichungstag der Anmeldung: 19.08.2015
(73) Patentinhaber: Voith Patent GmbH, 89522 Heidenheim (DE)
(72) Erfinder: RAPP, Petra, 88271 Wilhelmsdorf (DE)
(86) Internationale Anmeldenummer: PCT/EP2013/069435
(87) Internationale Veröffentlichungsnummer: WO 2014/056693

(56) Entgegenhaltungen:
- DE-A1-102010 039 512
- US-A- 3 452 874

## Beschreibung

Die Erfindung betrifft einen Scheibenfilter zur Abtrennung von Flüssigkeiten aus einer Suspension, insbesondere einer Faserstoffsuspension, mit einem Behälter zur Aufnahme der Suspension, einer sich horizontal im Behälter erstreckenden und rotierbar gelagerten Hohlwelle und mehreren auf der Hohlwelle befestigten und axial voneinander beabstandeten Filterscheiben, wobei die Filterscheiben aus mehreren separaten, kreissektorförmigen Filtersektoren bestehen, die Hohlwelle mehrere separate Kanäle besitzt, die Kanäle mit verschiedenen Filtersektoren in Verbindung stehen und ein Teil der Kanäle mit einer Unterdruckquelle verbunden ist, wobei die mit der Hohlwelle rotierenden Kanäle an wenigstens einem Wellenende in ein Ventilgehäuse münden, in dem sich zumindest ein nicht-rotierendes Unterdruckventil befindet, welches einerseits mit einer Unterdruckquelle in Verbindung steht und anderseits wenigstens eine, während der Rotation der Hohlwelle wechselnde Kanalmündung überdeckt. Derartige Scheibenfilter, wie sie in DE102010039512 und US 3452874 beschrieben sind, werden zur Eindickung der Suspension und in der Papierindustrie insbesondere zur Faserstoffrückgewinnung eingesetzt.
Hierzu ist die Hohlwelle in der Regel mit einer Unterdruckquelle verbunden. Auf den Filterscheiben bildet sich infolge des Druckunterschieds zwischen der Faserstoffsuspension und dem Innenraum der Filterscheiben eine Vliesschicht. Beim Eintauchen der Filterscheiben in die Faserstoffsuspension gelangt so weitestgehend nur Wasser in den Innenraum der Filterscheiben und damit die Hohlwelle.
Die Vliesschicht wird beim Austauchen über Schaber entfernt und zum entsprechenden Stoffauslauf geführt oder mit Wasser in den Stoffauslauf gespritzt. Dabei wird die rotierende Hohlwelle in der Regel über eine Lippendichtung gegenüber dem Behälter abgedichtet.
Insbesondere beim Füllen des Behälters mit der Suspension und der damit verbundenen Druckbelastung auf den Behälter, aber auch thermisch bedingt, kommt es zu axialen Relativbewegungen zwischen Hohlwelle und Behälter, was mit einer relativ starken Leckage verbunden ist.
Hinzu kommt, dass in der Regel nur der in der Suspension eingetauchte Bereich der Filterscheiben mit der Unterdruckquelle verbunden wird. Auf diese Weise ist es möglich, das über die Vliesschicht gefilterte Klarfiltrat separat abzuführen. Allerdings führt dies auch zu einem erhöhten Aufwand und zusätzlichen Dichtproblemen.
Die Aufgabe der Erfindung ist es daher den konstruktiven Aufwand bei möglichst geringer Leckage zu vermindern.

Erfindungsgemäß wurde die Aufgabe dadurch gelöst, dass das Unterdruckventil vollständig im Gehäuseventil untergebracht ist und die Verbindung zwischen Kanalmündung und Unterdruckventil gegenüber dem Ventilgehäuse abgedichtet ist.
Da das Unterdruckventil vollständig im Ventilgehäuse untergebracht ist, wird eventuelle Leckage des Unterdruckventils oder des Behälters im Ventilgehäuse aufgefangen. Die Abdichtung des Ventilgehäuses gestaltet sich dabei wesentlich einfacher, da im Ventilgehäuse Atmosphärendruck herrscht.
Durch diese Aufgabenteilung kann der Anschluss auch wesentlich kompakter gestaltet werden.
Besonders einfach ist die Abdichtung, wenn sich zwischen dem Unterdruckventil und dem Wellenende zumindest eine Unterdruckdichtung mit axialen Dichtflächen befindet. Um dabei axiale Relativbewegungen ausgleichen zu können, sollte das Unterdruckventil in axialer Richtung verschiebbar gelagert sein und beispielsweise mittels Federkraft gegen das Wellenende gedrückt werden.
Das Ventilgehäuse selbst kann mit Vorteil am Behälter befestigt und dabei gegenüber dem Behälter abgedichtet werden.

Dabei sollte sich zwischen dem Behälter und der Hohlwelle eine Behälterdichtung befinden, die den Innenraum des Behälters vom Innenraum des Ventilgehäuses trennt.

Um den Aufwand noch weiter zu verringern, können mehrere Kanäle mit nur einer Unterdruckquelle verbunden werden. Dies gilt insbesondere dann, wenn diese Kanalenden zu in Umfangsrichtung benachbarten Filtersektoren führen, so dass mit annähernd gleicher Qualität des Filtrats gerechnet werden kann.

Soll das Filtrat hinsichtlich seiner Qualität differenziert abgeführt werden, so ist es von Vorteil, wenn im Ventilgehäuse mehrere Unterdruckventile vorhanden sind. Da beim Eintauchen der Filterscheiben in die Suspension sich erst allmählich die Vliesschicht ausbildet, ist das Filtrat der eintauchenden Filtersektoren trüber als das der vor dem Auftauchen stehenden Filtersektoren.
Dementsprechend kann zum Beispiel den eintauchenden Filtersektoren, den kurz vor dem Auftauchen stehenden und den zwischen diesen liegenden, eingetauchten Filtersektoren ein separates Unterdruckventil zugeordnet werden.
Hierzu ist es außerdem vorteilhaft, wenn mehrere, vorzugsweise alle jeweils axial hintereinander liegenden Filtersektoren der Filterscheiben mit dem gleichen Kanal verbunden sind.

Um hierbei den Aufwand möglichst klein zu halten, sollten die Unterdruckventile miteinander verbunden und vorzugsweise sogar als ein Bauteil ausgeführt sein.
Dies bietet zusätzlich den Vorteil einer gemeinsamen Lagerung der Unterdruckventile.

Falls beide Enden der Hohlwelle aus dem Behälter geführt werden, um sie beispielsweise mit einer Unterdruckquelle zu verbinden, so sollte auch an beiden Enden eine erfindungsgemäße Vorrichtung realisiert werden.

Nachfolgend soll die Erfindung an mehreren Ausführungsbeispielen näher erläutert werden.
In der beigefügten Zeichnung zeigt:
Figur 1: einen schematischen Querschnitt durch einen Scheibenfilter;
Figur 2: eine Teil-Draufsicht auf diesen;
Figur 3: einen Querschnitt durch ein Ventilgehäuse 8 und
Figur 4: eine Draufsicht auf Unterdruckventile 9.
Die Faserstoffsuspension 1 wird gemäß Figur 1 über einen Einlauf 12 in den Behälter 2 des Scheibenfilters geleitet. Im Behälter 2 befindet sich eine horizontal verlaufende und rotierbar gelagerte Hohlwelle 4 mit mehreren axial voneinander beanstandeten Filterscheiben 3.
Die Filterscheiben 3 setzen sich dabei aus mehreren hohlen, kreissektorfömigen Filtersektoren 6 zusammen.
Um das Wasser aus der Suspension 1 abziehen zu können, werden die in der Suspension 1 befindlichen Filtersektoren 6 mit einer Unterdruckquelle verbunden. Hierzu besitzt die Hohlwelle 4 mehrere Kanäle 7, von denen jeder mit bestimmten Filtersektoren 6 der Filterscheiben 3 verbunden ist.
Üblicherweise werden die axial hintereinander angeordneten Filtersektoren 6 der Filterscheiben 3 jeweils mit dem gleichen Kanal 7 verbunden. Die sich beim Durchgang der Filterscheiben 3 durch die Suspension 1 an den Filtersektoren 6 bildende Vliesschicht filtert das Filtrat und sorgt dafür, dass die Qualität des Filtrats kurz vor dem Auftauchen besser als beim Eintauchen ist.
Nach dem Auftauchen aus der Suspension 1 wird die Vliesschicht dann in den Stoffauslauf 13 befördert.
Hierzu befinden sich die Stoffausläufe 13, wie in Figur 2 zu sehen, jeweils zwischen zwei benachbarten Filterscheiben 3.

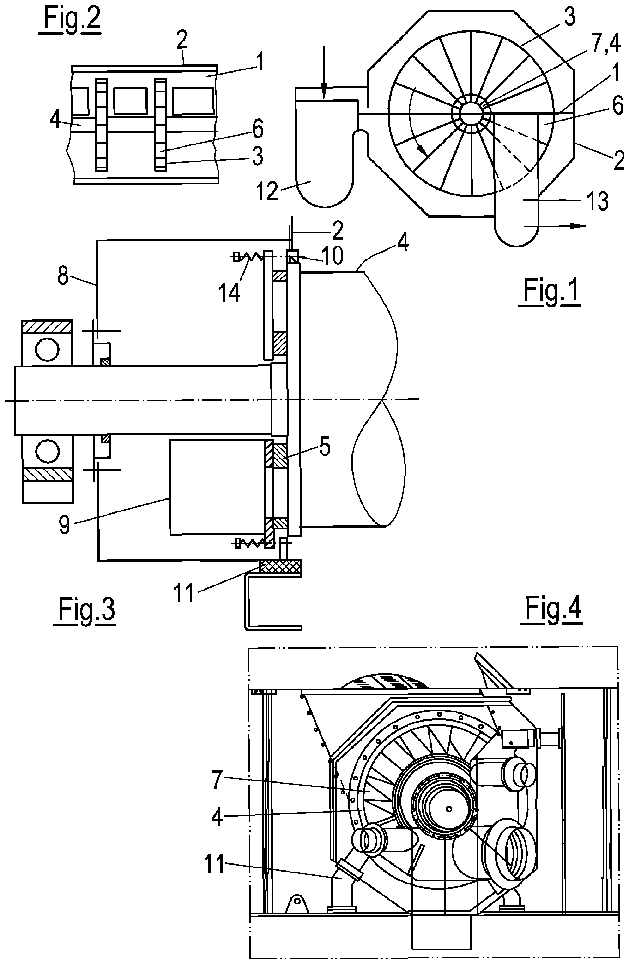

Die Hohlwelle 4 wird an beiden Enden aus dem Behälter 2 geführt und gelagert. Insbesondere beim Füllen des Behälters 2 mit der Faserstoffsuspension 1 kommt es auf Grund des hohen Drucks zu Verformungen beim Behälter 2, was eine Abdichtung zwischen der rotierenden Hohlwelle 4 und dem feststehenden Behälter 2 erschwert. Die Folge kann eine hohe Leckage sein, was die Umgebung aber auch die Funktion der Maschine beeinträchtigen dürfte.
Um die in der Suspension 1 befindlichen Filtersektoren 7 mit einer Unterdruckquelle verbinden zu können, wird in Figur 3 ein mit einer Unterdruckquelle verbundenes Unterdruckventil 9 gegen die Mündungen der entsprechenden Kanäle 7 gedrückt. Die Anpressung wird hierbei von Federelementen 14 übernommen.
Zum Ausgleich von axialen Relativbewegungen wird das Unterdruckventil 9 über mehrere verteilt angeordnete Lagerungen 11 axial verschiebbar fixiert, wobei sich die Federelemente an den Lagerungen 11 abstützen.
Die Abdichtung zwischen den Kanälen 7 und dem Unterdruckventil 9 erfolgt über eine Unterdruckdichtung 5 mit axialen Dichtflächen. Damit wird es möglich, dass das nichtrotierende Unterdruckventil 9 während der Rotation der Hohlwelle 4 wechselnde Kanalmündungen überdeckt und mit der Unterdruckquelle verbindet.
Um das Unterdruckventil 9 ist ein Ventilgehäuse 8 angeordnet, in das die anderen Kanäle 7 münden. In diesem Ventilgehäuse 8 herrscht Atmosphärendruck, was die Abdichtung erleichtert.
Die Aufgabe dieses Ventilgehäuses 8 ist es das trübe Filtrat aus den außerhalb der Suspension 1 befindlichen Filtersektoren 6 und eventuelle Leckage aus dem Unterdruckventil 9 sowie dem Behälter 2 zu sammeln und abzuführen.
Hierzu ist das Ventilgehäuse 8 abgedichtet am Behälter 2 befestigt. Eine weitere Behälterdichtung 10 befindet sich zwischen dem Behälter 2 und der Hohlwelle 4, die den Innenraum des Behälters 2 vom Innenraum des Ventilgehäuses 8 trennt.

Zur Minimierung des Aufwandes sind bei Figur 3 mehrere Kanäle 7 mit nur einer Unterdruckquelle verbunden, d.h. dass das Unterdruckventil 9 mehrere Kanalmündungen überdeckt.

Im Gegensatz hierzu befinden sich gemäß Figur 4 drei Unterdruckventile 9 im gemeinsamen Ventilgehäuse 8. Im Interesse einer einfachen Konstruktion sind diese Ventilgehäuse 9 allerdings miteinander verbunden oder sogar einstückig ausgeführt und gemeinsam gelagert.
Über die Unterdruckventile 9 kann so das Filtrat bestimmter Filtersektoren 7 in Abhängigkeit von der zur erwartenden Filtratqualität abgezogen werden. Dementsprechend werden die zuerst eingetauchten, die auftauchenden und die dazwischen liegenden Filtersektoren 7 separat einem Unterdruckventil 9 zugeordnet.

## Patentansprüche

1. Scheibenfilter zur Abtrennung von Flüssigkeiten aus einer Suspension (1), insbesondere einer Faserstoffsuspension, mit einem Behälter (2) zur Aufnahme der Suspension (1), einer sich horizontal im Behälter (2) erstreckenden und rotierbar gelagerten Hohlwelle (4) und mehreren auf der Hohlwelle (4) befestigten und axial voneinander beabstandeten Filterscheiben (3), wobei die Filterscheiben (3) aus mehreren separaten, kreissektorförmigen Filtersektoren (6) bestehen, die Hohlwelle (4) mehrere separate Kanäle (7) besitzt, die Kanäle (7) mit verschiedenen Filtersektoren (6) in Verbindung stehen und zumindest ein Teil der Kanäle (7) mit einer Unterdruckquelle verbunden ist, wobei die mit der Hohlwelle (4) rotierenden Kanäle (7) an wenigstens einem Wellenende in ein Ventilgehäuse (8) münden, in dem sich zumindest ein nicht-rotierendes Unterdruckventil (9) befindet, welches einerseits mit einer Unterdruckquelle in Verbindung steht und andererseits wenigstens eine, während der Rotation der Hohlwelle (4) wechselnde Kanalmündung überdeckt, **dadurch gekennzeichnet, dass** das Unterdruckventil (9) vollständig im Ventilgehäuse (8) untergebracht ist und die Verbindung zwischen Kanalmündung und Unterdruckventil (9) gegenüber dem Ventilgehäuse (8) abgedichtet ist.

2. Scheibenfilter nach Anspruch 1, **dadurch gekennzeichnet, dass** sich zwischen dem Unterdruckventil (9) und dem Wellenende zumindest eine Unterdruckdichtung (5) mit axialen Dichtflächen befindet.

3. Scheibenfilter nach Anspruch 1 oder 2, **dadurch gekennzeichnet, dass** das Unterdruckventil (9) in axialer Richtung verschiebbar gelagert ist und gegen das Wellenende gedrückt wird.

4. Scheibenfilter nach einem der vorhergehenden Ansprüche, **dadurch gekennzeichnet, dass** das Ventilgehäuse (8) am Behälter (2) befestigt ist.

5. Scheibenfilter nach einem der vorhergehenden Ansprüche, **dadurch gekennzeichnet, dass** sich zwischen dem Behälter (2) und der Hohlwelle (4) eine Behälterdichtung (10) befindet, die den Innenraum des Behälters (2) vom Innenraum des Ventilgehäuses (8) trennt.

6. Scheibenfilter nach einem der vorhergehenden Ansprüche, **dadurch gekennzeichnet, dass** mehrere Kanäle mit nur einer Unterdruckquelle verbunden sind.

7. Scheibenfilter nach einem der vorhergehenden Ansprüche, **dadurch gekennzeichnet, dass** im Ventilgehäuse (8) mehrere Unterdruckventile (9) vorhanden sind.

8. Scheibenfilter nach Anspruch 7, **dadurch gekennzeichnet, dass** die Unterdruckventile (9) miteinander verbunden sind.

9. Scheibenfilter nach Anspruch 7 oder 8, **dadurch gekennzeichnet, dass** die Unterdruckventile (9) eine gemeinsame Lagerung (11) besitzen.

10. Scheibenfilter nach einem der vorhergehenden Ansprüche, **dadurch gekennzeichnet, dass** mehrere, vorzugsweise alle jeweils axial hintereinander liegenden Filtersektoren (6) der Filterscheiben (3) mit dem gleichen Kanal (7) verbunden sind.

## Claims

1. Disc filter for separating liquids from a suspension (1), in particular a fibrous suspension, having a container (2) for receiving the suspension (1), a rotatably mounted hollow shaft (4) that extends horizontally in the container (2), and a plurality of filter discs (3) that are fastened to the hollow shaft (4) and are axially spaced apart from one another, wherein the filter discs (3) are composed of a plurality of separate sector -shaped filter sectors (6), the hollow shaft (4) having a plurality of separate ducts (7), the ducts (7) being connected to different filter sectors (6), and at least part of the ducts (7) being connected to a vacuum source, wherein the ducts (7) that rotate conjointly with the hollow shaft (4) at least at one shaft end open into a valve housing (8) in which at least one non-rotating vacuum valve (9) is located, said vacuum valve (9) being connected to a vacuum source, on the one hand, and covering at least one duct mouth that alternates during the rotation of the hollow shaft (4), on the other hand, **characterized in that** the vacuum valve (9) is completely accommodated in the valve housing (8) and the connection between the duct mouth and the vacuum valve (9) is sealed in relation to the valve housing (8).

2. Disc filter according to Claim 1, **characterized in that** at least one vacuum seal (5) having axial sealing faces is located between the vacuum valve (9) and the shaft end.

3. Disc filter according to either of Claims 1 and 2, **characterized in that** the vacuum valve (9) is mounted so as to displaceable in the axial direction and is pressed against the shaft end.

4. Disc filter according to one of the preceding claims, **characterized in that** the valve housing (8) is fastened to the container (2).

5. Disc filter according to one of the preceding claims, **characterized in that** a container seal (10) which separates the interior space of the container (2) from the interior space of the valve housing (8) is located between the container (2) and the hollow shaft (4).

6. Disc filter according to one of the preceding claims, **characterized in that** a plurality of ducts are connected to only one vacuum source.

7. Disc filter according to one of the preceding claims, **characterized in that** a plurality of vacuum valves (9) are present in the valve housing (8) .

8. Disc filter according to Claim 7, **characterized in that** the vacuum valves (9) are interconnected.

9. Disc filter according to either of Claims 7 and 8, **characterized in that** the vacuum valves (9) have a common mounting (11).

10. Disc filter according to one of the preceding claims, **characterized in that** a plurality of, preferably all, in each case axially sequential filter sectors (6) of the filter discs (3) are connected to the same duct (7).

## Revendications

1. Filtre à disques pour la séparation de liquides hors d'une suspension (1), en particulier d'une suspension de matière fibreuse, avec un récipient (2) destiné à contenir la suspension (1), un arbre creux (4) s'étendant horizontalement dans le récipient (2) et monté de façon rotative et plusieurs disques de filtre (3) fixés sur l'arbre creux (4) et axialement espacés l'un de l'autre, dans lequel les disques de filtre (3) se composent de plusieurs secteurs de filtre séparés (6) en forme de secteurs de cercle, l'arbre creux (4) comporte plusieurs canaux séparés (7), les canaux (7) sont en communication avec des secteurs de filtre différents (6) et au moins une partie des canaux (7) sont raccordés à une source de dépression, dans lequel les canaux (7) tournant avec l'arbre creux (4) débouchent à au moins une extrémité de l'arbre dans un boîtier de soupape (8), dans lequel il se trouve au moins une soupape à dépression (9) non rotative, qui d'une part est en communication avec une source de dépression et qui d'autre part recouvre pendant la rotation de l'arbre creux (4) au moins une embouchure de canal changeante, **caractérisé en ce que** la soupape à dépression (9) est installée entièrement dans le boîtier de soupape (8) et la liaison entre l'embouchure de canal et la soupape à dépression (9) est étanche par rapport au boîtier de soupape (8).

2. Filtre à disques selon la revendication 1, **caractérisé en ce qu'**il se trouve entre la soupape à dépression (9) et l'extrémité de l'arbre au moins un joint d'étanchéité à la dépression (5) avec des faces d'étanchéité axiales.

3. Filtre à disques selon la revendication 1 ou 2, **caractérisé en ce que** la soupape à dépression (9) est montée de façon déplaçable en direction axiale et est pressée contre l'extrémité de l'arbre.

4. Filtre à disques selon l'une quelconque des revendications précédentes, **caractérisé en ce que** le boîtier de soupape (8) est fixé au récipient (2).

5. Filtre à disques selon l'une quelconque des revendications précédentes, **caractérisé en ce qu'**il se trouve entre le récipient (2) et l'arbre creux (4) un joint d'étanchéité de récipient (10), qui sépare l'espace intérieur du récipient (2) de l'espace intérieur du boîtier de soupape (8).

6. Filtre à disques selon l'une quelconque des revendications précédentes, **caractérisé en ce que** plusieurs canaux sont raccordés à seulement une source de dépression.

7. Filtre à disques selon l'une quelconque des revendications précédentes, **caractérisé en ce qu'**il se trouve plusieurs soupapes à dépression (9) dans le boîtier de soupape (8).

8. Filtre à disques selon la revendication 7, **caractérisé en ce que** les soupapes à dépression (9) sont reliées l'une à l'autre.

9. Filtre à disques selon la revendication 7 ou 8, **caractérisé en ce que** les soupapes à dépression (9) possèdent un support commun (11).

10. Filtre à disques selon l'une quelconque des revendications précédentes, **caractérisé en ce que** plusieurs, de préférence tous les secteurs de filtre (6) disposés chaque fois axialement l'un derrière l'autre des disques de filtre (3) sont raccordés au même canal (7).
